# EUROPÄISCHE PATENTANMELDUNG

(11) **EP 1 104 859 A2**
(43) Veröffentlichungstag der Anmeldung: **06.06.2001**
(21) Anmeldenummer: 00122665.3
(22) Anmeldetag: 18.10.2000
(51) Int. Cl.: F16H 61/28

(54) **Getriebesteuerung**

(30) Priorität: 01.12.1999 DE 19957750
(71) Anmelder: WABCO GmbH & CO. OHG, 30432 Hannover (DE)
(72) Erfinder: Bortfeld, Harald, 30900 Wedemark (DE); Gulba, Michael, 31275 Lehnte (DE); Klik, Stefan, 30173 Hannover (DE); Meyer, Ingo, 31547 Rehburg-Loccum (DE); Schulz, Marcus, 31535 Neustadt (DE); Schumacher, Ralpf, 30459 Hannover (DE)
(74) Vertreter: Schrödter, Manfred

(57) **Zusammenfassung**

Vorgeschlagen wird eine Getriebesteuerung mit einem Gassenzylinder (1) zum Ansteuern von Schaltgassen und mit einem Gangzylinder (2) zum Ansteuern von Gängen. Die obengenannten Zylinder sind als kontinuierlich arbeitende Hydraulikzylinder ausgebildet, deren Stellung von Wegsensoren (3, 4) abgefühlt wird. Die korrekten Kolbenpositionen von Gassenzylinder (1) und Gangzylinder (2) werden mittels eines automatischen Einlernvorganges festgestellt und in einer Steuerelektronik (5) abgespeichert. Die Erfindung ist anwendbar in Pkws, Lkws und Bussen und soll insbesondere zur Steuerung von bisher handgeschalteten Getrieben dienen.

## Beschreibung

Die Erfindung bezieht sich auf eine Getriebesteuerung gemäß dem Oberbegriff des Patentanspruchs 1.

Eine derartige Getriebesteuerung ist beispielsweise aus der EP-PS 0 059 853 bekannt. Die bekannte Getriebesteuerung besitzt zum Einlegen der Gänge einen Gangzylinder, welcher pneumatisch über eine Ventilanordnung bewegt wird. Die Ventile sind dabei als Magnetventile ausgebildet und werden von einer elektronischen Auswerteschaltung angesteuert. Durch eine besondere, aufwendige Ausgestaltung des Gangzylinders wird erreicht, daß dieser drei Stellungen einnehmen kann, und zwar für die geraden Gänge, die Neutralstellung und die ungeraden Gänge.

Nachteilig an der bekannten Lösung ist der hohe Bauaufwand für den Gangzylinder und die zugehörigen Ventile. Ebenso aufwendig ist ein entsprechender Gassenzylinder.

Der Erfindung liegt die Aufgabe zugrunde, eine Getriebesteuerung anzugeben, welche mit geringerem Aufwand zur Betätigung von Getrieben verwendet werden kann.

Insbesondere soll die erfindungsgemäße Lösung zur Steuerung von bisher handgeschalteten Getrieben dienen.

Diese Aufgabe wird durch die im Patentanspruch 1 angegebene Erfindung gelöst. Die Unteransprüche enthalten zweckmäßige Weiterbildungen.

Durch den erfindungsgemäßen Einlernvorgang werden in vorteilhafter Weise die stets vorhandenen Abweichungen der verwendeten Wegsensoren, der hydraulischen Antriebszylinder und des Getriebes selbst berücksichtigt und ausgeglichen.

Der Einlernvorgang wird im allgemeinen vor der Inbetriebnahme des Fahrzeugs am Bandende des Fahrzeugherstellers durchgeführt. Er kann aber bei Bedarf auch später, z. B. bei einem Werkstattaufenthalt, erneut vorgenommen werden, um die eventuell im Betrieb entstandenen Veränderungen zwischen Getriebeschaltung und Getriebe aufgrund von Verschleißvorgängen auszugleichen. Bei Bedarf kann der Einlernvorgang auch während des Betriebs des Fahrzeugs durchgeführt werden.

Insbesondere werden die verwendeten Wegsensoren durch den erfindungsgemäßen Einlernvorgang an das vorhandene Getriebe angepaßt. Damit werden gleichzeitig die stets vorhandenen Toleranzen zwischen Wegsensor, hydraulischer Getriebeschaltung und Getriebe ausgeglichen. Die Wegsensoren können dadurch von kostengünstiger Bauart sein.

Vorteilhaft ist weiter, daß die Stellzylinder der hydraulischen Getriebeschaltung nicht wie beim Stand der Technik als besondere Mehr-Stellungszylinder ausgebildet sein müssen, sondern normale, kostengünstige, kontinuierlich arbeitende Zylinder eingesetzt werden können. Die verwendeten Wegsensoren dienen im Betrieb nicht nur zur korrekten Positionierung der Gänge, sondern vorteilhaft auch allgemein zur Überwachung der Getriebeschaltung.

Die erfindungsgemäße Anordnung kann in PKW's, LKW's und Bussen eingesetzt werden.

Die Erfindung wird im folgenden anhand einer Zeichnung näher erläutert.

Dabei zeigt
- Fig. 1: ein mechanisches Blockschaltbild der Getriebesteuerung,
- Fig. 2: ein Schema zur Erläuterung des Einlernprogrammes für die Gassensensierung und
- Fig. 3: ein Schema zur Erläuterung des Einlernprogrammes für die Gangsensierung.

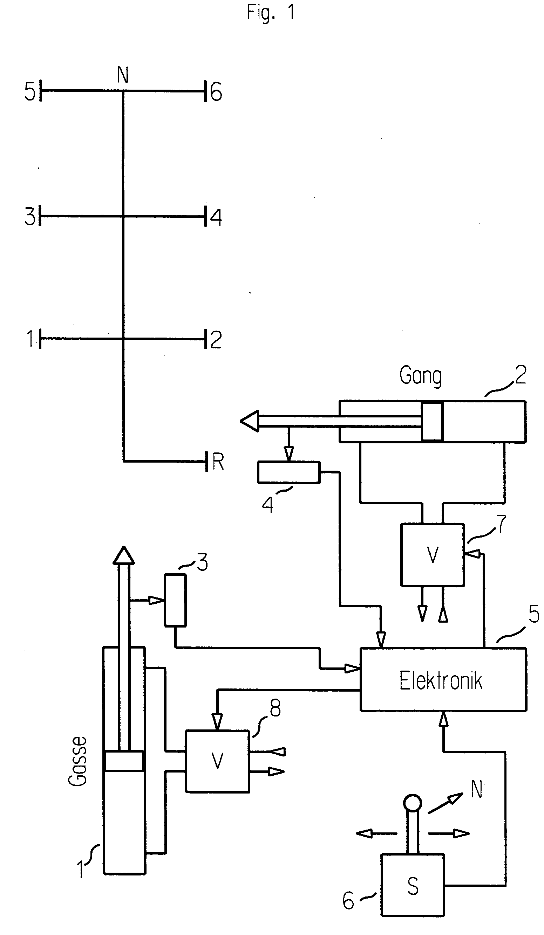

Das in der Fig. 1 dargestellte Blockschaltbild der Getriebesteuerung zeigt einen hydraulischen Gassenzylinder (1) zum Einlegen von vier Schaltgassen, und zwar dem Rückwärtsgang (R) und den Gängen 1/2, 3/4, und 5/6. Die Getriebesteuerung enthält weiter einen hydraulischen Gangzylinder (2) zum Einlegen der ungeraden Gänge (1, 3, 5), der Neutralstellung (N), sowie der geraden Gänge (2, 4, 6) sowie des Rückwärtsganges (R).

Die Stellung der Kolben von Gassenzylinder (1) und Gangzylinder (2) wird jeweils durch einen Wegsensor (3, 4) abgefühlt. Dabei ist die Stelle, an welcher die Wegmessung erfolgt, natürlich beliebig. Sie kann auch an anderen Teilen, die von den Kolben angetrieben werden, erfolgen.

Die Wegsensoren (3, 4) sind vorteilhaft als berührungslose Wegsensoren ausgebildet, die beispielsweise in an sich bekannter Weise auf induktiver Basis arbeiten können. Die elektrischen Ausgangssignale der Wegsensoren (3, 4) werden einer Steuerelektronik (5) zur Auswertung zugeführt.

Der Steuerelektronik (5) wird weiter das Ausgangssignal eines Schaltgebers (6) zugeführt. Der Schaltgeber (6) hat einen Schalthebel, mit welchem der Fahrer eine Hochschaltung, eine Runterschaltung, sowie eine Schaltung in die Neutralstellung (N) durchführen kann. Der Schaltgeber (6) kann sowohl zwischen den Vordersitzen als auch an der Lenksäule des Fahrzeugs angeordnet sein.

Zum Antrieb des Gassenzylinders (1) sowie des Gangzylinders (2) dient eine übliche hydraulische Druckerzeugungs-Anlage, die der Einfachheit halber nicht im einzelnen dargestellt ist. Die Anlage ist zur Bereitstellung des benötigten hydraulischen Drucks von etwa 60 - 80 bar ausgelegt und enthält zur Druck-Entlastung einen Rücklauf zum Tank.

Die genannten Zylinder sind als doppelt wirkende Zylinder ausgebildet, deren beide Druckräume vor und hinter dem Kolben jeweils von Ventilen (7, 8) mit Hydraulikdruck beaufschlagt bzw. entlastet werden können. Die Ventile (7, 8) sind als Dreistellungsventile ausgebildet, wodurch auch eine drucklose Stellung der Zylinder realisiert werden kann. In dieser Stellung sind die beiden Druckräume miteinander verbunden, so daß der Kolben von außen bewegt werden kann. Die Ventile (7, 8) sind als Magnetventile ausgebildet, und werden von der Elektronik (5) angesteuert.

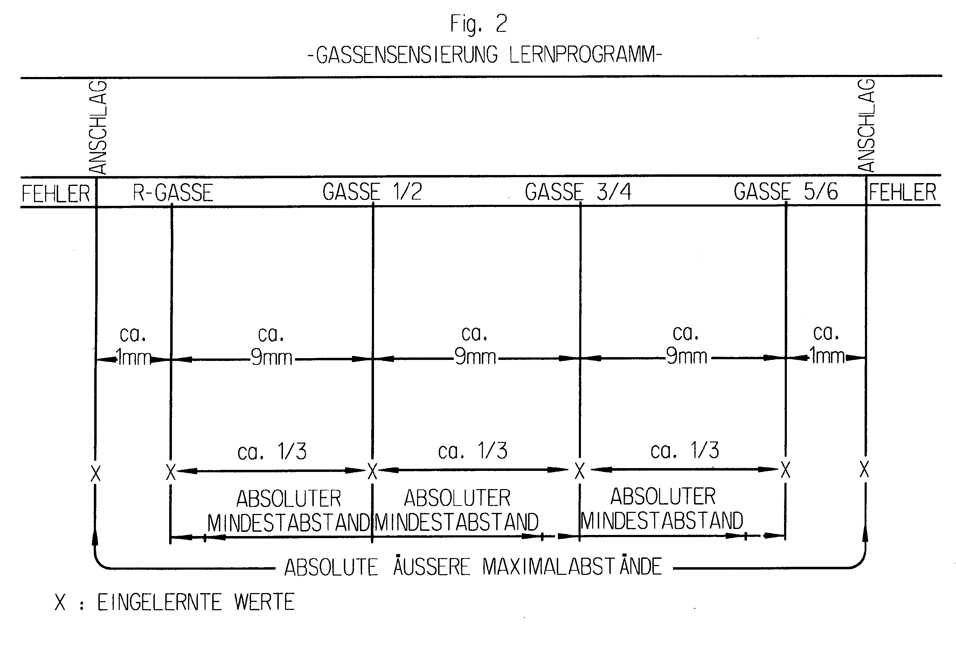

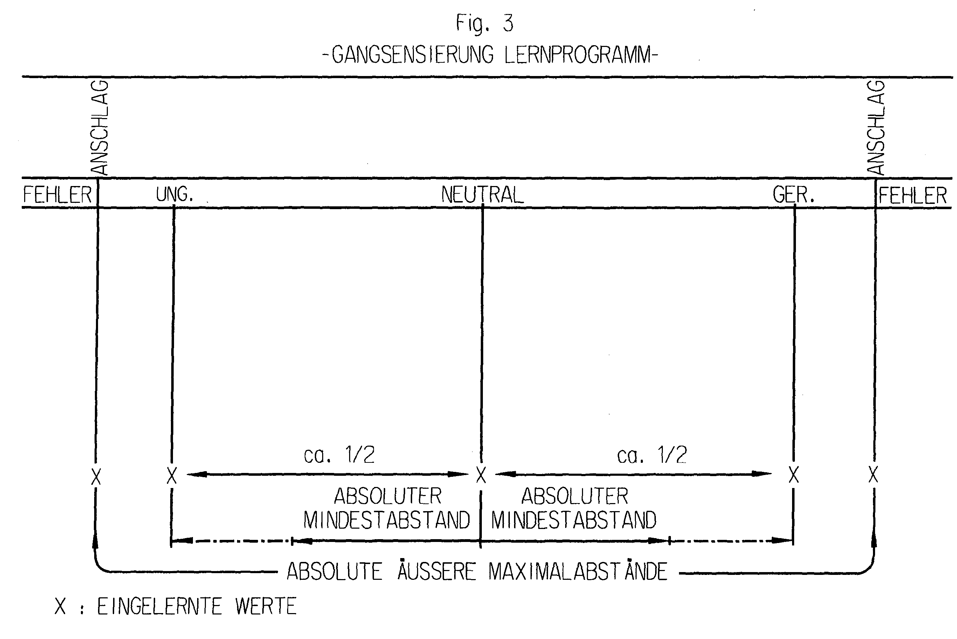

Im folgenden wird der Einlernvorgang für die hydraulische Getriebeschaltung genauer dargestellt. Dies geschieht im Zusammenhang mit den Fig. 2 und 3.

Da die Ausgangssignale bzw. das Verhältnis Ausgangssignal/Millimeter bei verschiedenen, auch baugleichen Wegsensoren nicht unerheblich differieren können, erfolgt ein eigener Einlernvorgang für dieses Verhältnis für jeden verbauten Wegsensor. Bei diesem Einlernvorgang werden für zwei bekannte Positionen (Endanschläge des Getriebes) die entsprechenden Wegwerte ermittelt. Da der mechanische Abstand dieser Positionen (absolute äußere Maximalabstände in den Fig. 2 und 3) für das betreffende Getriebe bekannt ist, läßt sich hieraus das o. g. Verhältnis Ausgangssignal/Millimeter für jeden Wegsensor ermitteln und abspeichern.

In einem ersten Schritt des Einlernvorganges wird geprüft, ob sich der Gassenzylinder (1) frei bewegen läßt. Hierzu wird der Gassenzylinder (1) mit Druck beaufschlagt. Falls durch ein entsprechendes Wegsignal des Wegsensors (3) nach der Druckaufschaltung eine Bewegung des Gassenzylinders (1) festgestellt wird, bedeutet das, daß der Gassenzylinder (1) beweglich ist, bzw. sich das Getriebe in der Neutralstellung befindet. Die genannte Bewegung muß dabei einen Schwellwert (Spiel) übersteigen.

Der Einlernvorgang kann dann sofort mit dem Einlernen des Wegsensors (3) für die Gasse fortgesetzt werden. In diesem Fall ergibt sich der Lernwert für die Gangposition "Neutralstellung" aus dem aktuellen Istwert des Wegsensors (4) für den Gangzylinder (2).

Läßt sich der Gassenzylinder (1) nicht frei bewegen, dann befindet sich das Getriebe nicht in Neutralstellung und es erfolgt zunächst das Einlernen der Gangpositionen für den Gangzylinder (2) in einer zunächst unbekannten Gassenstellung. Der vollständige Einlernvorgang des Wegsensors (4) für den Gangzylinder (2) wird weiter unten näher beschrieben.

Für das Einlernen des Wegsensors (3) für den Gassenzylinder (1) werden zunächst die beiden mechanischen Anschläge (siehe Fig. 2) des Getriebes angefahren und die zugehörigen Wegwerte des Sensors (3) werden in der Elektronik (5) abgespeichert.

Für das jeweilige Getriebe sind auch die Abstände der Schaltstangen zueinander, die Abstände der mechanischen Anschläge im Getriebesteller zu den entsprechenden äußeren Schaltstangen, und die Abstände der Anschläge zueinander bekannt. Da auch das o. g. Verhältnis Ausgangssignal/Millimeter des Wegsensors (3) inzwischen bekannt ist, lassen sich jetzt mit Hilfe der bekannten Wege (siehe Fig. 2) alle Gassenpositionen, nämlich die der Rückwärtsgasse, der Gasse 1/2, der Gasse 3/4 sowie der Gasse 5/6 anfahren. Dabei kann es allerdings sein, daß die angefahrenen Stellungen zunächst nur angenähert bzw. grob den tatsächlichen Gassenstellungen entsprechen.

In einem nächsten Lernschritt wird nun die Gassenposition 5/6 angefahren. Jetzt wird der fünfte Gang eingelegt. Dies funktioniert durch eine mechanische Zentrierung auch dann, wenn die Gassenstellung 5/6 nur grob angefahren wurde. Sobald durch ein entsprechendes Signal des Weggebers (4) für den Gangzylinder (2) erkennbar ist, daß der fünfte Gang vollständig eingelegt ist, wird die nun genaue Gassenposition 5/6 endgültig in der Steuerelektronik (5) abgespeichert.

Als nächstes wird grob die Gassenposition (R) angefahren und der Rückwärtsgang eingelegt. Wie oben beschrieben wird die sich bei diesem Schaltvorgang einstellende genaue Gassenposition des Rückwärtsganges als Lernwert für die Gasse (R) abgespeichert. In gleicher Weise erfolgt das Einlernen der Gassenstellungen 1/2 sowie 3/4.

Diese Gassenpositionen können aber auch anhand der bereits ermittelten Lernwerte und aufgrund der bekannten mechanischen Abmessungen des Getriebes direkt berechnet werden. Dabei können die durch Fertigungstoleranzen des Getriebes bedingten Abweichungen von den theoretisch bekannten Maßen nach erfolgten, zunächst ungenauen Schaltungen durch die oben erwähnten Zentrierungen durch eine elektronische Nachführung der Lernwerte berücksichtigt werden. Hierbei ist natürlich vorausgesetzt, daß die genannten Abweichungen so gering sind, daß aus den zunächst angefahrenen Gassenpositionen mit Hilfe von mechanischen Zentrierungen der Zielgang auch geschaltet werden kann.

Das Einlernen des Wegsensors (4) für die Gänge erfolgt in ähnlicher Weise wie das oben beschriebene Einlernen des Gassensensors (3) (vergl. Fig. 3).

Die Gangpositionen (1/3/5, N, 2/4/6/R) sind bei dem in Fig. 1 dargestellten Getriebe jeweils durch eine mechanische Raste festgelegt bzw. gesichert. Derartige Rasten sind bekannt und der Einfachheit halber nicht näher dargestellt.

Für den Einlernvorgang der Gangpositionen wird der Gangzylinder (2) zunächst an die beiden Endanschläge (vergl. Fig. 3) gefahren. Aus dieser Stellung heraus wird durch ein entsprechendes Umschalten des Ventils (7) der Gangzylinder in einen drucklosen und damit frei beweglichen Zustand gebracht. Der Gangzylinder wird daraufhin in die jeweils benachbarte Raste für den jeweils benachbarten Gang gezogen und hier von der Raste festgehalten. Dieser Vorgang wird durch den Wegsensor (4) erkannt und der Elektronik (5) gemeldet. Sobald sich die Weganzeige nicht mehr verändert wird angenommen, daß der zugehörige Gang eingerastet ist, und der entsprechende Wegwert wird als korrekte Gangposition bzw. als Lernwert in der Elektronik (5) abgespeichert.

Dieser Vorgang wird in allen Gassen sowohl für die ungeraden Gänge als auch für die geraden Gänge zusammen mit dem Rückwärtsgang durchgeführt.

Falls noch kein Lernwert für die Gangposition "Neutralstellung" vorliegt, so ergibt sich dieser zunächst theoretisch bei einem angenommenen symmetrischen Aufbau des Getriebes aus dem Mittelwert der beiden zuvor ermittelten Wegwerte für die Gangstellungen. Dabei wird eine lineare Kennlinie des verwendeten Wegsensors (4) vorausgesetzt.

Die so berechnete zunächst grobe Neutralstellung wird dann angefahren und das Ventil (7) wiederum auf drucklose Stellung umgeschaltet. Durch die oben erwähnte Rastung stellt sich dann die Neutralstellung exakt ein. Die so ermittelte genaue Gangposition für die Neutralstellung wird wiederum als jetzt genauer Lernwert für die Neutralstellung des Gangzylinders (2) in der Elektronik (5) abgespeichert.

Im folgenden Normalbetrieb des Fahrzeugs werden die so eingelernten Gangstellungen zur genauen Einstellung der gewünschten Gänge der Gangschaltung verwendet. Die Wegsensoren (3, 4) dienen dabei vorteilhaft nicht nur wie beschrieben zur Positionierung der Gänge, sondern auch allgemein zur elektronischen Funktionsüberwachung der Gangschaltung.

## Patentansprüche

1. Getriebesteuerung mit einem Gassenzylinder (1) zum Ansteuern von Schaltgassen und mit einem Gangzylinder (2) zum Ansteuern von Gängen sowie einer Neutralstellung, mit Wegsensoren (3, 4) zum Abfühlen der Kolbenstellung der Zylinder (1, 2), und mit einer Steuerelektronik (5), dadurch gekennzeichnet,
daß der Gassenzylinder (1) und der Gangzylinder (2) als kontinuierlich arbeitende Hydraulik-Zylinder ausgebildet sind,
und daß die korrekten Kolbenpositionen des Gassenzylinders (1) für die jeweilige Gasse (R, 1/2, 3/4, 5/6) und/oder die korrekten Kolbenpositionen des Gangzylinders (2) für die Gänge (1/3/5, R/2/4/6) sowie für die Neutralstellung (N) mittels eines automatischen Einlernvorganges festgestellt und in der Steuerelektronik (5) abgespeichert werden.

2. Getriebesteuerung nach Anspruch 1, dadurch gekennzeichnet, daß die Wegsensoren (3, 4) im Betrieb des Fahrzeuges sowohl zur Positionierung der Zylinder (1, 2) als auch zur Stellungsüberwachung der Zylinder (1, 2) dienen.

3. Getriebesteuerung nach Anspruch 1, dadurch gekennzeichnet, daß durch den Einlernvorgang zunächst für zwei bekannte Kolbenpositionen der Zylinder (1, 2) die zugehörigen Wegwerte ermittelt werden.

4. Getriebesteuerung nach Anspruch 3, dadurch gekennzeichnet, daß als bekannte Positionen die beiden mechanischen Endanschläge der Kolben der Zylinder (1, 2) an Teilen des Getriebes verwendet werden.

5. Getriebesteuerung nach einem der vorhergehenden Ansprüche 1 bis 4, dadurch gekennzeichnet, daß weitere Zwischenpositionen der Zylinder (1, 2) mit Hilfe der bekannten mechanischen Abmessungen des zu schaltenden Getriebes angesteuert werden, wobei eine lineare Kennlinie der Wegsensoren (3, 4) angenommen wird.
